# EUROPÄISCHE PATENTSCHRIFT

(11) **EP 3 134 715 B1**
(45) Veröffentlichungstag und Bekanntmachung des Hinweises auf die Patenterteilung: **19.06.2024**
(21) Anmeldenummer: 15722652.3
(22) Anmeldetag: 24.04.2015
(51) Int. Cl.: G01K 1/14, F16L 41/00

(54) **VERBINDUNGSEINRICHTUNG UND VERFAHREN ZUM HERSTELLEN EINER VERBINDUNGSEINRICHTUNG**
CONNECTION DEVICE AND METHOD FOR PRODUCING A CONNECTION DEVICE
DISPOSITIF DE RACCORDEMENT ET PROCÉDÉ DE FABRICATION D'UN DISPOSITIF DE RACCORDEMENT

(30) Priorität: 24.04.2014 DE 102014005818
(43) Veröffentlichungstag der Anmeldung: 01.03.2017
(60) Teilanmeldung: 23020164.2
(73) Patentinhaber: Voss Automotive GmbH, 51688 Wipperfürth (DE)
(72) Erfinder: GMEINER, Swen, 51709 Marienheide (DE); DE BEER, Daniel, 51766 Engelskirchen (DE); SCHWARZKOPF, Otfried, 51515 Kürten (DE); ZWILLUS, Christian, 51702 Bergneustadt (DE); ETSCHEID, Tobias, 51789 Lindlar (DE); KLEIN, Roland, 51688 Wipperfürth (DE)
(74) Vertreter: Rebbereh, Cornelia
(86) Internationale Anmeldenummer: PCT/EP2015/000853
(87) Internationale Veröffentlichungsnummer: WO 2015/161929

(56) Entgegenhaltungen:
- EP-A1- 2 538 052
- WO-A1-2009/080501
- DE-A1- 4 237 038
- DE-A1-102004 062 908
- DE-A1-102009 060 363
- FR-A1- 2 711 393

## Beschreibung

Die Erfindung betrifft eine Verbindungseinrichtung zum Verbinden zumindest zweier Medienleitungen, oder einer Medienleitung mit einem Aggregat, wobei die Verbindungseinrichtung ein Gehäuse mit zumindest einem inneren von Medium durchströmbaren Mediumkanal und zumindest eine Messeinrichtung mit Sensorelement zur Bestimmung zumindest einer Kenngröße des Mediums, wie der Mediumtemperatur, umfasst, und ein Verfahren zum Herstellen der Verbindungseinrichtung.

Verbindungseinrichtungen zum Verbinden zumindest zweier Medienleitungen sind im Stand der Technik bekannt. Die Medienleitungen können dabei Rohr- oder Schlauchleitungen sein. Die Verbindungseinrichtungen können ferner zum Verbinden einer Medienleitung mit einem Aggregat bzw. einer Anschlusseinrichtung eines Aggregats dienen. Insbesondere in Fahrzeugen werden Medienleitungen zum Leiten von flüssigen Medien verwendet, wobei zum Koppeln bzw. Aneinanderschließen mehrerer Medienleitungen üblicherweise Verbindungseinrichtungen vorgesehen werden, bei denen ein Kupplungsteil und ein Steckerteil miteinander verbunden werden. Zum Medientransport innerhalb der Verbindungseinrichtung ist ein innerer von Medium durchströmbarer Mediumkanal vorgesehen. Dieser bildet eine Fluid- bzw. Strömungsverbindung der zumindest zwei Anschlussabschnitte der Verbindungseinrichtung miteinander, wobei an den Anschlussabschnitten ein Anschluss der Medienleitungen und/oder der Aggregate möglich ist.

Um Kenngrößen des Mediums erfassen zu können, wie insbesondere die Mediumtemperatur, ist es ferner bekannt, diese beim Durchströmen der Verbindungseinrichtung durch Messeinrichtungen mit Sensorelementen zu erfassen, wie beispielsweise in der DE 10 2009 060 363 A1 offenbart. Gemäß dieser Druckschrift des Standes der Technik weist die Verbindungseinheit ein Gehäuse, einen das Gehäuse durchdringenden Kanal, einen in dem Gehäuse integrierten Anschlussbereich und eine in dem Gehäuse integrierte und in den Kanal und in den Anschlussbereich ragende Messvorrichtung auf. Die Messvorrichtung umfasst ein Trägerelement, einen mit dem Trägerelement an Anschlussstellen verbundenen Sensor, eine die Anschlussstellen umgebende Ummantelung und eine den Sensor überdeckende Kappe. Die Kappe besteht aus einem thermoleitfähigen Material. Zwischen der Kappe und dem Sensor ist eine Wärmeleitpaste angeordnet, wodurch eine Messung der Temperatur des in dem Kanal befindlichen Mediums erfolgen kann. Die Wärmeleitpaste dient nicht nur zum Temperaturleiten, sondern auch dazu, Vibrationen zu dämpfen. Als Kappenmaterial wird rostfreier Stahl vorgeschlagen. Die Messvorrichtung wird als Inlay in das im Spritzgussverfahren hergestellte Gehäuse der Verbindungseinheit eingebracht. Die Messvorrichtung gemäß diesem Stand der Technik wird somit auf aufwendige Art und Weise hergestellt, und auch beim Integrieren der Messvorrichtung als Inlay im Spritzgussprozess bei der Herstellung des Gehäuses der Verbindungseinheit ist das Verfahren des Aufnehmens der Messvorrichtung verhältnismäßig komplex. Hierbei ist nicht sichergestellt, dass tatsächlich eine dichte Aufnahme der Messvorrichtung in dem Gehäuse der Verbindungseinheit erfolgen kann.

Die DE 10 2004 062 908 A1 offenbart einen Kennfeldthermostat mit einem Ventilgehäuse. In das Ventilgehäuse ist ein Sensor integriert, der die Temperatur des in der Mischkammer des Kennfeldthermostaten befindlichen Kühlmittels erfasst. Der Sensor ist in das Gehäuse des Kennfeldthermostaten mittels eines Spritzvorgangs eingeformt worden, mit welchem das Gehäuse hergestellt worden ist.

Der vorliegenden Erfindung liegt daher die Aufgabe zugrunde, eine Verbindungseinrichtung zum Verbinden zumindest zweier Medienleitungen oder zumindest einer Medienleitung mit zumindest einem Aggregat und ein Verfahren zu deren Herstellung vorzusehen, die diese Nachteile des Standes der Technik vermeiden und bei denen ein besonders hoher Integrationsgrad, wenig einzelne zu integrierende Teile und insgesamt eine kompakte Bauform der Verbindungseinrichtung ermöglicht wird.

Die Aufgabe wird gemäß Anspruch 1 durch eine Verbindungseinrichtung nach der eingangs beschriebenen Art dadurch gelöst, dass das Sensorelement der Messeinrichtung form- und/oder kraft- und/oder stoffschlüssig in einem wärmeleitfähigen Kunststoffmaterial dicht gegenüber dem durch den Mediumkanal strömenden oder strömbaren Medium aufgenommen ist und das wärmeleitfähige Kunststoffmaterial stoffschlüssig mit einem diesem benachbarten Kunststoffmaterial des Gehäuses der Verbindungseinrichtung verbunden ist, wobei das Gehäuse der Verbindungseinrichtung aus zumindest zwei Kunststoffmaterialien besteht, wobei zumindest ein Kunststoffmaterial des Gehäuses nicht oder wenig wärmeleitfähig ist und zumindest ein zweites Kunststoffmaterial des Gehäuses wärmeleitfähig ist, wobei das wärmeleitfähige Kunststoffmaterial des Gehäuses im Bereich des Sensorelements angeordnet ist, wobei der mit dem wärmeleitfähigen Kunststoffmaterial versehene Teil der Messeinrichtung und/oder der mit dem wärmeleitfähigen Kunststoffmaterial versehene Teil einer den Mediumkanal begrenzenden Wandung des Gehäuses der Verbindungseinrichtung in den Mediumkanal hineinragt und zumindest teilweise von Medium umströmbar oder umströmt ist, wobei das Sensorelement dabei form- und/oder kraft- und/oder stoffschlüssig in das wärmeleitfähige Kunststoffmaterial aufgenommen ist. Für ein Verfahren wird die Aufgabe gemäß Anspruchs 8 dadurch gelöst, dass das Sensorelement der Messeinrichtung mit einem wärmeleitfähigen Spritzguss- oder Gussmaterial formschlüssig ummantelt und das Gehäuse der Verbindungseinrichtung spritzgegossen wird, wobei das wärmeleitfähige Kunststoffmaterial mit dem das Gehäuse der Verbindungseinrichtung ausbildenden Kunststoffmaterial beim Spritzgießen stoffschlüssig verbunden wird und wobei das wärmeleitfähige Kunststoffmaterial in den Mediumkanal hineinragt oder in eine diesen begrenzende Wandung integriert wird. Weiterbildungen der Erfindung sind in den abhängigen Ansprüchen definiert.

Dadurch werden eine Verbindungseinrichtung sowie eine Messeinrichtung, die in dieser verwendet wird, vorgeschlagen, die durch Vorsehen einer stoffschlüssigen Verbindung von wärmeleitfähigem Kunststoffmaterial mit dem übrigen Kunststoffmaterial des Gehäuses der Verbindungseinrichtung eine vollständig dichte Aufnahme des Sensorelements der Messeinrichtung in der Verbindungseinrichtung ermöglicht. Eine dichte Aufnahme bedeutet hierbei, dass ein Durchtritt von Medium aus dem Mediumkanal zu dem Sensorelement aufgrund des Stoffschlusses, also konstruktiv, sicher verhindert wird. Das im Hinblick auf die durch die Messeinrichtung zu erfassende Kenngröße des Mediums wärmeleitfähige Material wird nachfolgend als leitfähiges Material bezeichnet. Das leitfähige Material kann dementsprechend die Kenngröße des Mediums, die von der Messeinrichtung erfasst werden soll, leiten. Dieses kann lediglich als ein Bereich einer Wandung des Gehäuses der Verbindungseinrichtung ausgebildet sein, wobei das Sensorelement bzw. die Messeinrichtung in diese ebenfalls integriert werden kann. Dies kann stoffschlüssig und/oder durch Vorsehen einer entsprechenden Aufnahme oder Aussparung in einer Wandung des Gehäuses erfolgen, in die das Sensorelement formschlüssig aufgenommen wird. Auch eine kraftschlüssige Aufnahme ist grundsätzlich möglich. Ferner kann auch bereits das Sensorelement selbst mit wärmeleitfähigem Material zumindest teilweise überzogen werden, so dass das Material des Gehäuses der Verbindungseinrichtung auch in der Umgebung des Sensorelements nicht unbedingt wärmeleitfähig zu sein braucht. Selbstverständlich ist es möglich, dass auch das Material des Gehäuses der Verbindungseinrichtung in dem Bereich, in dem die Messeinrichtung bzw. das Sensorelement, das teilweise von leitfähigem Material formschlüssig ummantelt ist, aufgenommen wird, leitfähig ist. In jedem der Fälle kann eine vollständige Abdichtung des Sensorelements gegenüber dem durch den Mediumkanal strömenden Medium durch das formschlüssige Verbinden des leitfähigen Materials, das zur Aufnahme des Sensorelements dient, und des umliegenden Materials des Gehäuses der Verbindungseinrichtung geschaffen werden, im Unterschied zu dem Einformen der Kappe bei der Verbindungseinrichtung gemäß der DE 10 2009 060 363 A1. Gegenüber dieser Lösung des Standes der Technik wird außerdem eine kompakte Bauform erzielt, da aufgrund der stoffschlüssigen Verbindung des wärmeleitfähigen Materials mit dem umliegenden Material des Gehäuses der Verbindungseinrichtung und der formschlüssigen Aufnahme des Sensorelementes in dem leitfähigen Material nicht zahlreiche Einzelteile miteinander verbunden zu werden brauchen, sondern eine kompakte Einheit von Verbindungseinrichtung und Messeinrichtung geschaffen wird. Das Gehäuse der Verbindungseinrichtung besteht aus zumindest zwei Materialien, wobei zumindest ein Material nicht oder wenig leitfähig ist und zumindest ein zweites Material wärmeleitfähig ist. Somit kann eine optimale Kombination von Materialien für das übrige Gehäuse der Verbindungseinrichtung und den Bereich mit dem leitfähigen Material, das im Bereich des Sensorelements angeordnet ist, vorgesehen werden, so dass das übrige Gehäuse der Verbindungseinrichtung, also der außerhalb des wärmeleitfähigen Bereichs vorgesehene Gehäuseteil, eine üblicherweise gewünschte hohe mechanische Festigkeit aufweisen kann und dennoch eine sehr gute Temperaturmessung bezüglich des Mediums, das durch den Mediumkanal der Verbindungseinrichtung strömt, erfolgen kann. Es besteht dementsprechend nicht das Problem, dass z.B. wärmeleitende Zuschlagstoffe, die im wärmeleitfähigen Material enthalten sind, sich negativ auf die mechanischen Eigenschaften des Gehäuses der Verbindungseinrichtung auswirken. Gerade durch die Kombination von Metall und Kunststoff und den hiermit verbundenen unterschiedlichen Wärmeausdehnungskoeffizienten ist bei der Lösung nach der DE 10 2009 060 363 A1 bei Temperaturänderungen das Auftreten von Leckagepfaden möglich. Durch das formschlüssige Ummanteln des Sensorelements mit dem wärmeleitfähigen Material und der dementsprechend guten Wärmeübertragung kann gemäß der vorliegenden Erfindung ein Offset zwischen der am Sensorelement anliegenden Temperatur und der zu messenden Medientemperatur im Unterschied zum Stand der Technik sehr klein gehalten werden. Würde demgegenüber das Sensorelement direkt in einen nicht wärmeleitfähigen Kunststoff eingebettet, wie beispielsweise glasfaserverstärktem Polyamid, wie PA66 GF30, so ginge dies aufgrund der deutlich schlechteren Wärmeleitfähigkeit von Kunststoffen, die ca. 0,2 W/(m*K) beträgt, gegenüber Metallen zu Lasten der Ansprechzeit und würde zu einem großen Offset zwischen der am Sensorelement anliegenden Temperatur und der zu messenden Medientemperatur führen. Aufgrund der erfindungsgemäßen Einbettung des Sensorelementes in wärmeleitfähiges Kunststoffmaterial sind schnelle Reaktionszeiten und dementsprechend geringe Temperaturoffsets möglich. Eine Leckagepfadbildung wird ebenfalls vermieden, da das Sensorelement nicht direkt im Medienkontakt steht, sondern eine wie auch immer ausgebildete stoffschlüssig mit dem sonstigen Material des Gehäuses der Verbindungseinrichtung verbundene Wandung aus wärmeleitfähigem Material das Sensorelement gegenüber dem Medium, das durch den Mediumkanal strömt, abdichtet. Das Sensorelement kann beispielsweise ein NTC-Widerstand sein, also ein Negative Temperature Coefficient Widerstand.

Als besonders vorteilhaft erweist es sich, wenn das wärmeleitfähige Material zusätzlich elektrisch isolierend ist. Ferner kann sowohl das wärmeleitfähige Material als auch das nicht leitfähige Material, z.B. zur Verwendung mit Kühlwasser als Medium, hydrolysestabilisiert sein. Ein geeignetes Material ist beispielsweise das von der Firma EPIC Polymers Limited unter der Bezeichnung STAR-THERM ^{®} W A-2 HT angebotene PA66, das wärmeleitfähig dotiert, hochhitzestabilisiert und elektrisch isolierend ist. Dieses Material weist bei 23 °C eine Zugfestigkeit von 145 MPa bzw. ein Zug E-Modul von 12,500 MPa in spritzfrischem Zustand auf. Alternativ hierzu können auch Materialien, wie PA12, PA11 oder PPA (Polyphthalamid), die jeweils wärmeleitfähig dotiert sind, als wärmeleitfähiges Material verwendet werden. Weitere Beispiele verwendbarer wärmeleitfähiger Materialien sind beispielsweise das thermisch und elektrisch leitfähige, unter der Bezeichnung ALCOM von der Firma Albis Plastic GmbH, Hamburg, angebotene PA66 910/30.1 TCE2, oder das ALCOM PA66 910/30.2 TCD2, ALCOM PA66 910/30.3 TCD1, ALCOM PA12 920/30.4 TCD1 als thermisch leitfähige und elektrisch isolierende Polymermaterialien. Besonders bevorzugt kann ALCOM PBT 700/30.2 TCD2 verwendet werden, das ein Zugmodul von 8.900 MPa und eine Wärmeleitfähigkeit von 2 W/m*K aufweist. Grundsätzlich sind als Basispolymere, die wärmeleitfähig dotiert werden und die beliebig compoundierbar sind, Polymere, wie PA (Polyamid), PP (Polyphenylen), PBT (Polybutylenterephthalat), PE (Polyethylen), TPE (thermoplastisches Elastomer) oder PPS (Polyphenylensulfid) verwendbar. Diese jeweiligen Basispolymere können ohne wärmeleitfähige Dotierung, ggf. glasfaserverstärkt, um die gewünschte mechanische Festigkeit aufzuweisen, für das übrige Gehäuse der Verbindungseinrichtung als Spritzgussmaterial verwendet werden. Im wärmeleitfähigen Material ist in jedem Falle ein ggf. ebenfalls vorgesehener Glasfaseranteil sehr viel geringer als im umgebenden Material des Gehäuses der Verbindungseinrichtung. Vorzugsweise ist der Glasfaseranteil im Bereich des wärmeleitfähigen Materials Null.

Die Messeinrichtung bzw. das Sensorelement ist im Übergangsbereich zwischen den Anschlussenden der Verbindungseinrichtung angeordnet. Die Anschlussenden der Verbindungseinrichtung können beliebig ausgebildet sein, beispielsweise als Dornabschnitt, als Schlauchverbindungsabschnitt, als Anschlussabschnitt zum Laserverschweißen mit einer Medienleitung, als Steckverbinderabschnitt, als Abschnitt zum Anklipsen oder auch als Abschnitt zum Ankleben bzw. Verkleben mit einer dort eingefügten Medienleitung. Die Verbindungseinrichtung kann als Winkelverbinder oder gerader Verbinder ausgebildet sein.

Die Messeinrichtung kann in eine den Mediumkanal begrenzende Wandung stoffschlüssig integriert sein. Hierbei wird zunächst das Sensorelement der Messeinrichtung mit wärmeleitfähigem Material formschlüssig ummantelt und nachfolgend beim Spritzgießen des Gehäuses der Verbindungseinrichtung in dieses stoffschlüssig integriert. Die formschlüssige Ummantelung des Sensorelements kann insbesondere durch Umspritzen oder Umgießen des Sensorelementes mit wärmeleitfähigem Material geschaffen werden. Das Sensorelement kann mit der formschlüssigen Ummantelung aus leitfähigem Material oder ohne diese in dem Wandungsbereich der Verbindungseinrichtung, der aus wärmeleitfähigem Material besteht oder dieses als Komponente umfasst, angeordnet sein. Es ist also nicht nur möglich, zunächst das Sensorelement mit wärmeleitfähigem Material formschlüssig zu ummanteln und dieses nachfolgend beim Spritzgießvorgang zur Herstellung des Gehäuses der Verbindungseinrichtung stoffschlüssig in das Material des Gehäuses der Verbindungseinrichtung einzuschließen, sondern es ist ebenfalls möglich, das Sensorelement in wärmeleitfähiges Material eines Abschnitts oder Wandungsbereichs des Gehäuses der Verbindungseinrichtung mit aufzunehmen, dieses also beim Spritzgießvorgang dieses Wandungsbereichs mit einzuspritzen. Das Gehäuse der Verbindungseinrichtung ist in diesem Falle ein zumindest Zweikomponentengehäuse, wobei die eine Komponente das wärmeleitfähige Material in dem an den Mediumkanal angrenzenden Wandungsbereich, in den das Sensorelement aufgenommen wird, ist und die andere Komponente das diesen Wandungsbereich umgebende Material des Gehäuses der Verbindungseinrichtung. Letzteres ist zumeist thermisch isolierend.

Zumindest ein Abschnitt des mit der formschlüssigen Ummantelung aus bezüglich der zu erfassenden Kenngröße des Mediums leitfähigem Material versehenen Sensorelements in der Messeinrichtung kann in den Mediumkanal hineinragen. Hierdurch ist eine besonders gute Umströmung des wärmeleitfähigen Materials mit dem Medium, das durch den Mediumkanal strömt, möglich, so dass besonders gut die Temperatur des Mediums von dem Sensorelement erfasst werden kann. Hierbei ist es möglich, dass entweder die formschlüssige Ummantelung des Sensorelements, die aus wärmeleitfähigem Material besteht, direkt in den Mediumkanal hineinragt. Oder diese formschlüssige Ummantelung aus wärmeleitfähigem Material kann in eine den Mediumkanal begrenzende Wandung im Übergangsbereich zwischen den Anschlussabschnitten des Gehäuses der Verbindungseinrichtung aufgenommen werden, wobei dieser Wandungsabschnitt des Gehäuses der Verbindungseinrichtung nicht aus wärmeleitfähigem Material zu bestehen braucht. Die Materialstärke des Wandungsteils, der das das Sensorelement formschlüssig ummantelnde wärmeleitfähige Material überdeckt, ist allerdings vorteilhaft vergleichsweise dünn, so dass die Temperaturerfassung der Mediumtemperatur hierdurch nicht negativ beeinflusst wird. Ferner kann selbstverständlich auch der Wandungsabschnitt des Gehäuses der Verbindungseinrichtung, in den das mit wärmeleitfähigem Material formschlüssig ummantelte Sensorelement stoffschlüssig integriert wird, aus wärmeleitfähigem Material bestehen. In diesem Falle kann der das wärmeleitfähig ummantelte Sensorelement überdeckende Teil der Wandung auch dicker ausgebildet werden, da ein Wärmeübertrag vom Medium hin zum Sensorelement durch den aus wärmeleitfähigem Material bestehenden Wandungsbereich des Gehäuses der Verbindungseinrichtung problemlos möglich ist.

Neben den vorstehend beschriebenen Möglichkeiten eines formschlüssigen und stoffschlüssigen Integrierens des Sensorelements in die Wandung bzw. einen Wandungsbereich des Gehäuses der Verbindungseinrichtung kann ferner in der Wandung der Verbindungseinrichtung eine taschenartige Ausnehmung oder Ausformung aus wärmeleitfähigem Material zum Einfügen der Messeinrichtung vorgesehen sein. Hierbei ist es nicht erforderlich, dass das Sensorelement von einem wärmeleitfähigen Material formschlüssig umspritzt bzw. umgossen wird. Vielmehr wird das Sensorelement bzw. die Messeinrichtung formschlüssig in der taschenartigen Ausnehmung aus wärmeleitfähigem Material aufgenommen, so dass hierdurch ebenfalls wiederum ein optimaler Wärmeübergang von dem die taschenartige Ausnehmung aus wärmeleitfähigem Material umströmenden Medium zu dem Sensorelement möglich ist. Die taschenartige Ausnehmung aus wärmeleitfähigem Material ragt in den Mediumkanal hinein, wird dementsprechend von Medium umströmt, so dass ein sehr guter Wärmeübergang von dem Medium auf das wärmeleitfähige Material und von diesem auf das Sensorelement ermöglicht wird.

Um eine Isolation des Bereichs, in dem das Sensorelement zum Erfassen der Temperatur des Mediums angeordnet ist, gegenüber der Umgebung vorzusehen, kann zumindest in dem Bereich, in dem die Messeinrichtung in der Verbindungseinrichtung angeordnet ist, die Verbindungseinrichtung außenseitig mit einer Isoliereinrichtung, insbesondere einer außenseitigen Kapselung, versehen sein. Eine solche außenseitige Kapselung kann nicht nur in dem Bereich, in dem die Messeinrichtung angeordnet ist, also dem Übergangsbereich zwischen den Anschlussabschnitten der Verbindungseinrichtung zum Anschließen von Medienleitungen bzw. Aggregaten ummantelnd vorgesehen sein, sondern auch die gesamte Verbindungseinrichtung überdecken und dementsprechend nach außen hin isolieren.

Um das Sensorelement beim Umspritzen mit wärmeleitfähigem Material nicht zu beschädigen, erweist es sich als vorteilhaft, den Prozessdruck beim Umspritzen des Sensorelements mit wärmeleitfähigem Material geringer als den Prozessdruck beim Spritzgießen des Gehäuses der Verbindungseinrichtung zu halten. Besonders vorteilhaft beträgt der Werkzeuginnendruck beim Umspritzen des Sensorelements weniger als 500 bar, beispielsweise 150 bis 250 bar. Der Prozessdruck beim Spritzgießen des Gehäuses der Verbindungseinrichtung wird höher gewählt, beispielsweise auf 500 bis 1.000 bar, da zum Erzeugen der teilweise sehr aufwendigen Kontur, insbesondere eines Dornprofils, im Bereich der Anschlussabschnitte des Gehäuses der Verbindungseinrichtung hohe Drücke erforderlich sind, um diese erzeugen zu können. Hohe Drücke könnten das Sensorelement jedoch beim Umspritzen beschädigen, so dass hierfür die genannten deutlich niedrigeren Drücke verwendet werden. Insbesondere beträgt das Verhältnis von Spritzdruck beim Spritzgießen des Gehäuses zu dem Druck beim Umspritzen des Sensorelements 2 bis 4.

Das wärmeleitfähige Material wird vorteilhaft so ausgewählt, dass sich eine stoffschlüssige Verbindung von wärmeleitfähigem Material und dem übrigen Material des Gehäuses der Verbindungseinrichtung ausbildet. Beide Materialien sind Kunststoffmaterialien und gehören vorteilhaft einer ähnlichen Materialklasse mit ähnlichen Schmelzpunkten an, z.B. PA 66 und PA 66(WA-2HT), oder die Materialien weisen eine chemische Kompatibilität auf. Durch die Wahl einer ähnlichen oder gleichen Materialklasse und von Materialien, deren Schmelzpunkte eng beieinander liegen, also ähnlich oder sogar gleich sind, ist ein sehr gutes stoffschlüssiges Verbinden der Materialien möglich. Zum stoffschlüssigen Verbinden wird eine Randschicht des vorteilhaft vorumspritzten Sensorelements angeschmolzen, so dass das das Sensorelement ummantelnde wärmeleitfähige Material sich stoffschlüssig mit dem Spritzgussmaterial, aus dem das Gehäuse der Verbindungseinrichtung gefertigt wird, verbindet. Beim Vorsehen zweier Komponenten für das Spritzgießen des Gehäuses, also einer wärmeleitfähigen und einer thermisch isolierenden Komponente, können entweder beide parallel spritzgegossen werden oder nacheinander, wobei auch dabei die Randschicht des wärmeleitfähigen Bereichs zum stoffschlüssigen Verbinden mit dem thermisch isolierenden Material aufgeschmolzen werden kann, wenn die Schmelzpunkte beider Materialien eng beieinander liegen. Das das Gehäuse bildende Material kann insbesondere glasfaserverstärkt und thermisch isolierend sein, wohingegen das wärmeleitfähige Material wärmeleitfähig dotiert ist.

Ein besonders gutes stoffschlüssiges Verbinden des vorumspritzten Sensorelements bzw. des Bereichs, der aus wärmeleitfähigem Material besteht, mit dem Spritzgussmaterial, das das Gehäuse der Verbindungseinrichtung bildet, kann auch dadurch unterstützt werden, dass an dem mit wärmeleitfähigem Material vorumspritzten Sensorelement zumindest ein auskragendes bzw. außenseitig vorkragendes Element zum Unterstützen eines Anschmelzens beim stoffschlüssigen Integrieren der Messeinrichtung in das Material des Gehäuses der Verbindungseinrichtung vorgesehen ist. Hierbei ist es möglich, dass das außenseitig vorkragende Element nicht vollständig aufschmilzt und sich stoffschlüssig mit dem Material, das das Gehäuse der Verbindungseinrichtung ausbildet, verbindet, sondern teilweise für eine formschlüssige Verbindung noch zur Verfügung steht. Selbst dann, wenn keine vollständige stoffschlüssige Verbindung erfolgt, kann durch die außenseitig vorkragenden Elemente bzw. das zumindest eine außenseitig vorkragende Element eine formschlüssige Verbindung geschaffen werden, so dass in jedem Falle eine dichte Verbindung trotzdem vorgesehen wird. Als außenseitig vorkragendes Element kann insbesondere zumindest eine vorkragende Rippe vorgesehen werden, die sich stoffschlüssig mit dem Material des Gehäuses der Verbindungseinrichtung bei dessen Spritzgussvorgang verbindet.

Bei der Herstellung der Messeinrichtung wird das Sensorelement zunächst mit zwei Anschlusselementen zum elektrischen Kontaktieren versehen. Nachfolgend wird lediglich ein Abschnitt der Anschlusselemente und das Sensorelement mit dem wärmeleitfähigen Material stoffschlüssig ummantelt, insbesondere umspritzt oder umgossen. Das zumindest eine vorkragende und/oder zurückspringende Element kann im Übergangsbereich von dem Sensorelement zu den Anschlusselementen ausgebildet bzw. vorgesehen werden, wobei ein späteres Eingießen der Messeinrichtung auch lediglich bis zu diesem mit dem zumindest einen vorkragenden und/oder zurückspringenden Element versehenen Bereich der Messeinrichtung erfolgen kann. Zumindest ein Teilabschnitt der Anschlusselemente bleibt dabei frei von Gussmaterial, um das elektrische Kontaktieren des Sensorelements zu ermöglichen.

Die Formgebung der formschlüssigen Ummantelung aus wärmeleitfähigem bzw. wärmeleitfähigem und elektrisch isolierendem Material kann insbesondere dann, wenn die Messeinrichtung mit dieser Ummantelung in den Strömungsweg des Mediums in dem Mediumkanal hineinragt, strömungsoptimiert geformt sein oder werden, so dass auch Druckverluste beim Vorbeiströmen des Mediums an der Messeinrichtung minimiert werden können. Eine solche strömungsoptimierte Kontur der formschlüssigen Ummantelung aus wärmeleitfähigem Material des Sensorelements kann bspw. eine Zylinderform, Tropfenform oder auch Bootsrumpfform oder die Form einer Finne aufweisen. Auch andere strömungsoptimierte Konturen und Formgebungen sind hier möglich. Soll die Ummantelung aus wärmeleitfähigem Material ohnehin lediglich vollständig in die Wandung des Gehäuses der Verbindungseinrichtung integriert werden, ist die Formgebung der Ummantelung im Prinzip unerheblich, so dass auch nicht strömungsoptimierte Konturen hier verwendbar sind.

Die Schichtdicke der Ummantelung aus wärmeleitfähigem Material des Sensorelements kann weniger als 1 mm, vorzugsweise weniger als 0,5 mm Wandstärke betragen. Diese ist ausreichend, um einen optimalen Wärmeübergang in das Sensorelement zu ermöglichen.

Zur näheren Erläuterung der Erfindung werden im Folgenden Ausführungsbeispiele von dieser näher anhand der Zeichnungen beschrieben. Diese zeigen in:
- Figur 1: eine Querschnittsansicht einer nicht erfindungsgemäßen Verbindungseinrichtung mit einer Messeinrichtung im Übergangsbereich zwischen zwei Anschlussabschnitten der Verbindungseinrichtung,
- Figur 2: eine perspektivische Ansicht eines ersten Konfektionierungsschritts einer Messeinrichtung mit SMD-Sensorelement.
- Figur 3: eine perspektivische Ansicht des mit Anschlusselementen versehenen SMD-Sensorelements im zweiten Konfektionierungsschritt nach Ummanteln des Sensorelements und eines Abschnitts der Anschlusselemente mit einem wärmeleitfähigen Material,
- Figur 4: eine perspektivische Ansicht einer fertiggestellten Messeinrichtung, wobei die wärmeleitfähige Ummantelung eine Bootsrumpfform aufweist und außenseitig angeordnete umlaufende Rippen vorgesehen sind,
- Figur 5: eine Seitenansicht der Messeinrichtung gemäß Figur 4 mit angedeutetem Umspritzungsbereich beim Einspritzen der Messeinrichtung in das Gehäuse der Verbindungseinrichtung gemäß Figur 1,
- Figur 6: ein Temperatur-Zeit-Diagramm zur Veranschaulichung des geringen Temperaturoffsets zwischen der am Sensorelement anliegenden Temperatur und der zu messenden Mediumtemperatur unter gleichzeitiger Darstellung der Ansprechzeit,
- Figur 7: eine Querschnittsansicht einer zweiten Ausführungsform eines erfindungsgemäßen Gehäuses einer erfindungsgemäßen Verbindungseinrichtung, wobei ein Abschnitt des Gehäuses aus wärmeleitfähigem Material besteht und eine taschenartige Ausnehmung zum formschlüssigen Einfügen eines Sensorelements darin ausgebildet ist,
- Figur 8: eine Längsschnittansicht durch eine weitere Ausführungsform eines erfindungsgemäßen Gehäuses einer erfindungsgemäßen Verbindungseinrichtung mit taschenartiger Ausnehmung zum Einfügen eines Sensorelements, wobei der Abschnitt des Gehäuses, der die taschenartige Ausnehmung umfasst, aus wärmeleitfähigem Material besteht,
- Figur 9: eine Querschnittsansicht durch das Gehäuse der Verbindungseinrichtung gemäß Figur 8 im Bereich der Linie A-A,
- Figur 10: eine Querschnittsansicht durch eine weitere Ausführungsform einer nicht erfindungsgemäß ausgebildeten Verbindungseinrichtung mit einer Messeinrichtung, die in den Strömungsweg des Mediums bzw. in den Mediumkanal im Inneren des Gehäuses der Verbindungseinrichtung hinein ragt,
- Figur 11: eine Querschnittsansicht durch eine weitere Ausführungsform einer nicht erfindungsgemäßen Verbindungseinrichtung mit einer Messeinrichtung, die stoffschlüssig in eine ausgeformte, in den Mediumkanal des Gehäuses der Verbindungseinrichtung hineinragende Wandung integriert ist, wobei eine außenseitige Kapselung des die Messeinrichtung umfassenden Bereichs der Verbindungseinrichtung vorgesehen ist,
- Figur 12: eine Querschnittsansicht durch eine weitere Ausführungsform einer erfindungsgemäßen Verbindungseinrichtung, wobei ein Wandungsbereich des Gehäuses der Verbindungseinrichtung aus einem wärmeleitfähigen Material besteht, in das das Sensorelement der Messeinrichtung direkt mit eingespritzt ist,
- Figur 13: eine Querschnittsansicht durch eine weitere Ausführungsform einer erfindungsgemäßen Verbindungseinrichtung, wobei eine erfindungsgemäße Messeinrichtung in einen Wandungsbereich aus wärmeleitfähigem Material stoffschlüssig integriert ist und der Wandungsbereich in den Mediumkanal im Gehäuse der Verbindungseinrichtung hinein ragt, und
- Figur 14: eine Querschnittsansicht durch eine gegenüber der Ausführungsform nach Figur 11 modifizierte Ausführungsform einer nicht erfindungsgemäßen Verbindungseinrichtung, wobei die Messeinrichtung zylindrisch ausgebildet und durch Laserschweißen in das Gehäuse der Verbindungseinrichtung eingebettet ist.

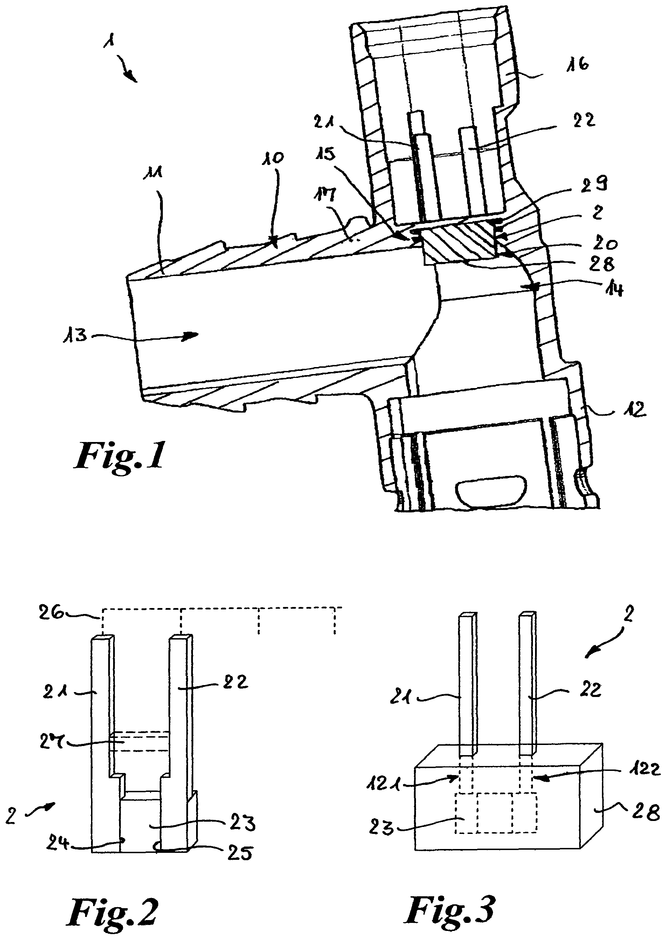

Figur 1 zeigt eine Querschnittsansicht durch das Gehäuse 10 einer Verbindungseinrichtung 1 zum Verbinden zweier Medienleitungen miteinander oder einer Medienleitung mit einem Aggregat, wie beispielsweise einer Dosiereinheit im Bereich eines Fahrzeugmotors oder einer Pumpe im Bereich eines Fahrzeugtanks. Das Gehäuse 10 der Verbindungseinrichtung umfasst zum Verbinden mit Medienleitungen und/oder Aggregaten zwei Anschlussabschnitte 11, 12. Der Anschlussabschnitt 11 ist mit einem Dornprofil versehen zum Aufdornen einer Medienleitung, während der Anschlussabschnitt 12 mit einem Steckbereich versehen ist zum Steckverbinden mit einer Medienleitung bzw. dem Anschlussabschnitt eines Aggregats. Die beiden Anschlussabschnitte 11, 12 werden im Inneren des Gehäuses 10 der Verbindungseinrichtung 1 durch einen Mediumkanal 13 miteinander strömungsverbunden. Die beiden Anschlussabschnitte 11, 12 sind winklig zueinander angeordnet, dementsprechend auch der Mediumkanal winklig geformt. Im Übergangsbereich 14 zwischen den beiden Anschlussabschnitten 11, 12 ragt in den Mediumkanal 13 ein frontseitiges Ende 20 einer Messeinrichtung 2 hinein. Die Messeinrichtung 2 ist in das Material der dort vorgesehenen Wandung 15 des Gehäuses 10 der Verbindungseinrichtung 1 formschlüssig und stoffschlüssig integriert bzw. aufgenommen. Ein Ummantelungsabschnitt 28 der Messeinrichtung 2 der in der Wandung 15 des Gehäuses 10 der Verbindungseinrichtung 1 stoffschlüssig aufgenommen ist, besteht aus einem wärmeleitfähigen Material, während das umliegende Material 17 der Wandung 15 sowie des übrigen Gehäuses 10 der Verbindungseinrichtung nicht aus einem wärmeleitfähigen, sondern aus einem thermisch isolierenden Material ausreichender mechanischer Festigkeit besteht, um den mechanischen Anforderungen an eine solche Verbindungseinrichtung gewachsen zu sein.

Zum elektrischen Kontaktieren der Messeinrichtung 2 weist diese zwei Anschlusselemente 21, 22 auf, die in einen Anschlussabschnitt 16 des Gehäuses 10 der Verbindungseinrichtung 1 hineinragen. In diesen Anschlussabschnitt 16 des Gehäuses 10 der Verbindungseinrichtung 1 kann ein Elektrostecker bzw. eine Elektrokupplung eingesteckt werden, um einen elektrischen Anschluss der Messeinrichtung 2 zu ermöglichen. Die Anschlusselemente 21, 22 der Messeinrichtung 2 sind dementsprechend Kontaktstifte, die einen solchen elektrischen Anschluss des Sensorelementes 23, das die Hauptkomponente der Messeinrichtung 2 ist, ermöglichen.

Das Sensorelement 23 kann beispielsweise als SMD-Bauteil ausgebildet sein, wie in den Figuren 2 und 3 angedeutet. In seinen Kontaktbereichen 24, 25 wird das SMD-Sensorelement mit den Anschlusselementen 21, 22 verbunden bzw. kontaktiert, wie in Figur 2 angedeutet. Zum automatisierten Konfektionieren des SMD-Sensorelementes zu der Messeinrichtung 2 können die SMD-Sensorelemente z.B. auf einem Band bevorratet und eine Matrix-Struktur an nebeneinander angeordneten Anschlusselementen 21, 22 verwendet werden. Durch Auflegen der Matrixstruktur aus Anschlusselementen 21, 22 auf die entsprechenden Kontaktbereiche 24, 25 der SMD-Sensorelemente 23 können diese auf einfache Art und Weise kontaktiert werden. Wie in Figur 2 weiter angedeutet, können die einzelnen Anschlusselemente 21, 22 entsprechend über Verbindungsstege 26 zur Matrixstruktur miteinander verbunden sein, ebenfalls über Querstege 27, die nach dem Kontaktieren mit den SMD-Sensorelement 23 herausgebrochen werden können.

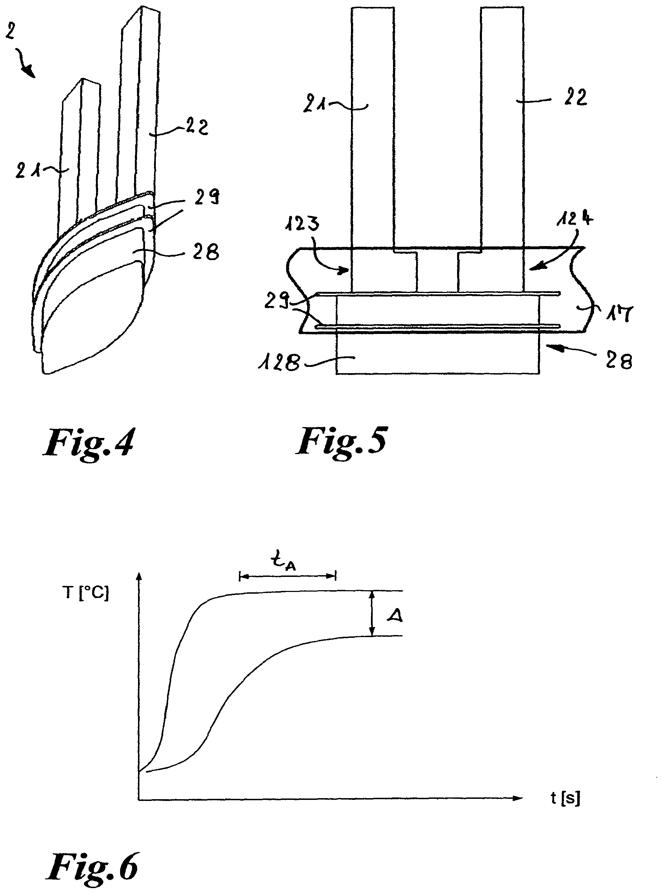

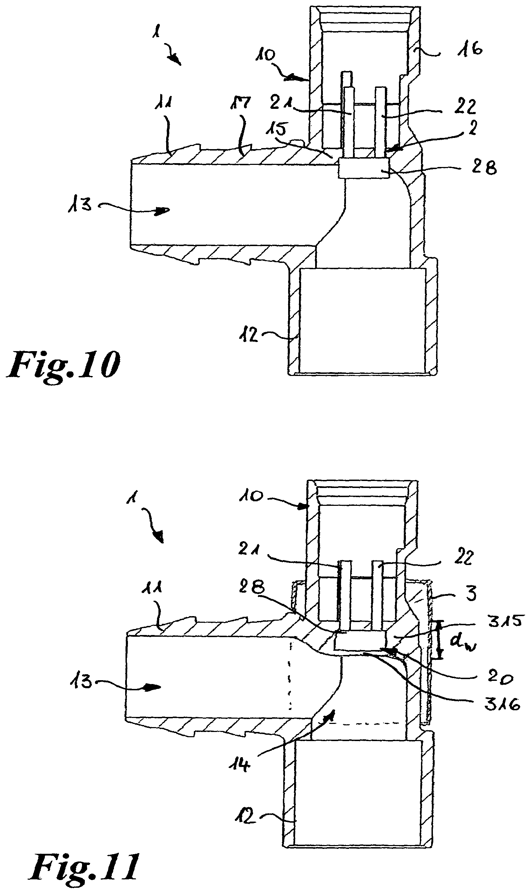

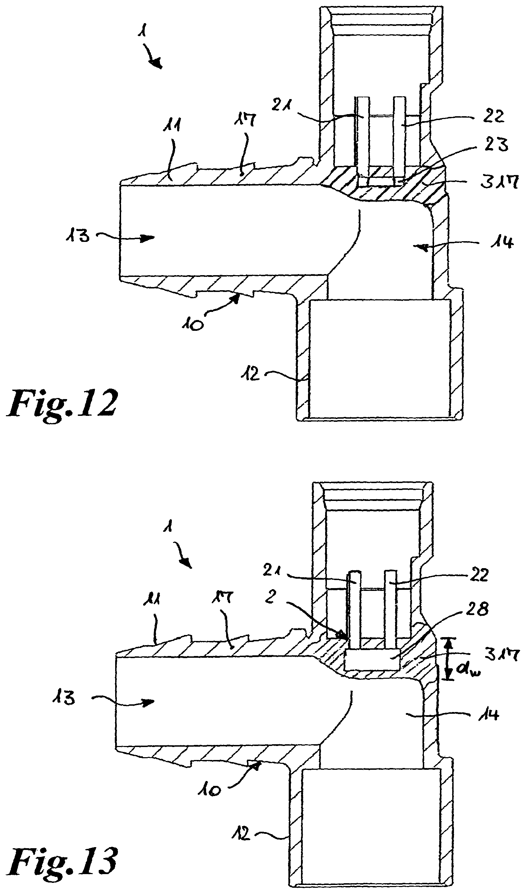

Das sich ergebende vorkonfektionierte Sensorelement kann entweder direkt in eine Wandung des Gehäuses der Verbindungseinrichtung bei dessen Spritzgießen mit eingebracht und darin integriert werden, wie in Figur 12 angedeutet, oder das mit den Anschlusselementen 21, 22 vormontierte Sensorelement 23 kann mit einem wärmeleitenden, insbesondere einem wärmeleitenden und elektrisch isolierenden, Material umspritzt werden, wodurch sich der Ummantelungs- bzw. Umspritzungsabschnitt 28 aus wärmeleitfähigem Material wie in Figur 3 angedeutet, ergibt. Der Ummantelungsabschnitt 28 aus wärmeleitfähigem, insbesondere auch elektrisch isolierendem, Material ummantelt formschlüssig nicht nur das Sensorelement 23, sondern auch einen jeweiligen Abschnitt 121, 122 der beiden Anschlusselemente 21, 22. Dies kann ebenfalls Figur 3 entnommen werden. Die Formgebung des Ummantelungsabschnitts 28 aus wärmeleitfähigem Material kann, wie in Figur 3 angedeutet, beispielsweise quaderförmig sein. Ebenfalls ist es möglich und im Hinblick auf eine Strömungsoptimierung auch vorteilhaft, eine andere Formgebung, wie beispielsweise die in Figur 4 gezeigte Bootsrumpfform des Ummantelungsabschnitts 28 vorzusehen. Ferner ist beispielsweise die Formgebung einer Finne, eines Zylinders oder auch eines Tropfens möglich. Eine strömungsoptimierte Formgebung erweist sich insbesondere bei der in Figur 1 und Figur 10 gezeigten Anordnung eines Teils des Ummantelungsabschnitts 28 der Messeinrichtung 2 im Mediumkanal 13 als vorteilhaft, da ein Umströmen mit dem dort hindurchströmenden Medium weniger stark gestört wird, somit Druckverluste dort minimiert werden können.

Wie den Figuren 4 und 5 weiter entnommen werden kann, weist der Ummantelungs- bzw. Umspritzungsabschnitt 28 der Messeinrichtung 2 außenseitig umlaufende vorkragende Elemente in Form von Rippen 29 auf. Hier sind zwei Rippen 29 beispielhaft gezeigt, es können jedoch auch mehr oder weniger Rippen oder ähnliche bzw. andere vorkragende und/oder zurückspringende Elemente vorgesehen werden, die ein stoffschlüssiges Verbinden des Ummantelungsabschnitts 28 aus wärmeleitfähigem Material mit dem Material 17 des Gehäuses 10 der Verbindungseinrichtung 1 unterstützen. Die Rippen 29 dienen dazu, das Anschmelzen der äußeren Randschicht des Ummantelungsabschnitts 28 der Messeinrichtung 2 beim Umspritzen mit dem übrigen Material 17, das das Gehäuse bilden soll, zu unterstützen und bei nicht vollständigem Aufschmelzen der Rippen während des Spritzgießens mit dem Gehäusematerial der Verbindungseinrichtung 1 auch eine formschlüssige Verbindung im Bereich der nicht vollständig aufgeschmolzenen Rippen vorzusehen. In jedem Falle kann eine optimale Verbindung des Ummantelungsabschnitts 28 der Messeinrichtung 2 mit dem Material 17 des Gehäuses 10 der Verbindungseinrichtung 1 geschaffen werden.

Wie in Figur 5 zu sehen, wird bei der Ausführungsvariante der Verbindungseinrichtung nach Figur 1 lediglich ein Teilabschnitt 128 des Ummantelungsabschnitts 28 mit dem Material 17, das das Gehäuse 10 der Verbindungseinrichtung 1 ausbildet, umspritzt. Der Abschnitt 128 des Ummantelungsabschnitts 28 ragt in den Mediumkanal 13 hinein, wird also von dem Material 17, das das Gehäuse 10 bildet, nicht umschlossen. Alternativ ist jedoch, wie in den Figuren 11 und 13 angedeutet, auch ein vollständiges Umspritzen des gesamten Ummantelungsabschnitts 28 der Messeinrichtung 2 mit dem Material 17 des Gehäuses 10 bzw. einem wärmeleitfähig dotierten, dem Material 17 ähnlichen Material möglich (Figur 13), das wärmeleitfähig ist und die Wandung 15 des Gehäuses 10, die den Mediumkanal 13 begrenzt, ausbildet. Wie Figur 5 weiter entnommen werden kann, umgibt das Material 17 außer einem Teil des Ummantelungsabschnitts 28 auch einen jeweiligen Abschnitt 123, 124 der Abschlusselemente 21, 22.

Zum stoffschlüssigen Verbinden des Ummantelungsabschnitts 28 aus wärmeleitfähigem Material mit dem umgebenden Material 17, das das Gehäuse 10 der Verbindungseinrichtung 1 bildet, werden Materialien aus ähnlichen Materialklassen für das Material des Ummantelungsabschnitts 28 und das Material 17 des übrigen Gehäuses 10 vorgesehen, deren Schmelzpunkte nahe beieinander liegen, um ein gutes stoffschlüssiges und somit dichtes Verbinden dieser Materialien zu ermöglichen. Der Druck beim Umspritzen bzw. formschlüssigen Ummanteln des Sensorelements 23 und der Abschnitte 121, 122 der Anschlusselemente 21, 22 beim Umspritzen mit dem Ummantelungs- bzw. Umspritzungsabschnitt 28 aus wärmeleitfähigen Material kann niedriger gewählt werden als der Druck, der für das Ausformen der Kontur des Gehäuses 10, insbesondere im Bereich der Anschlussabschnitte 11, 12 erforderlich ist. Insbesondere kann der Prozessdruck für das Spritzgießen des Umspritzungsabschnitts 28 aus wärmeleitfähigem Material weniger als 600 bar betragen, insbesondere 150 bis 250 bar, der Druck für das Ausbilden der übrigen Kontur des Gehäuses 10 über diesem Prozessdruck liegen, z.B. bei 500 bis 1.000 bar.

Durch das formschlüssige Einbetten bzw. Ummanteln, insbesondere Umspritzen oder Umgießen, des Sensorelementes 23 und der Abschnitte 121 und 122 der Anschlusselemente 21, 22 mit dem wärmeleitfähigen Material zum Ausbilden des Ummantelungsabschnitts 28 ist es möglich, den Offset zwischen der am Sensorelement 23 anliegenden Temperatur und der zu messenden Medientemperatur gering zu halten. Dies ist in dem Temperatur-Zeit-Diagramm in Figur 6 angedeutet, bei dem die Temperatur T in °C über der Zeit t in Sekunden aufgetragen ist. Darin bedeutet die Zeit t_{A} die Ansprechzeit des Sensorelementes 23, wobei die obere Temperaturkurve die Temperatur des Mediums, das durch die Verbindungseinrichtung 1 und entsprechend an dem Sensorelement 23 bzw. dem wärmeleitfähigen Material, das das Sensorelement formschlüssig umgibt, vorbeiströmt und die untere Temperaturkurve die am Sensorelement gemessene Temperatur angibt. Der Offset zwischen beiden Temperaturen wird in Figur 6 mit Δ angedeutet.

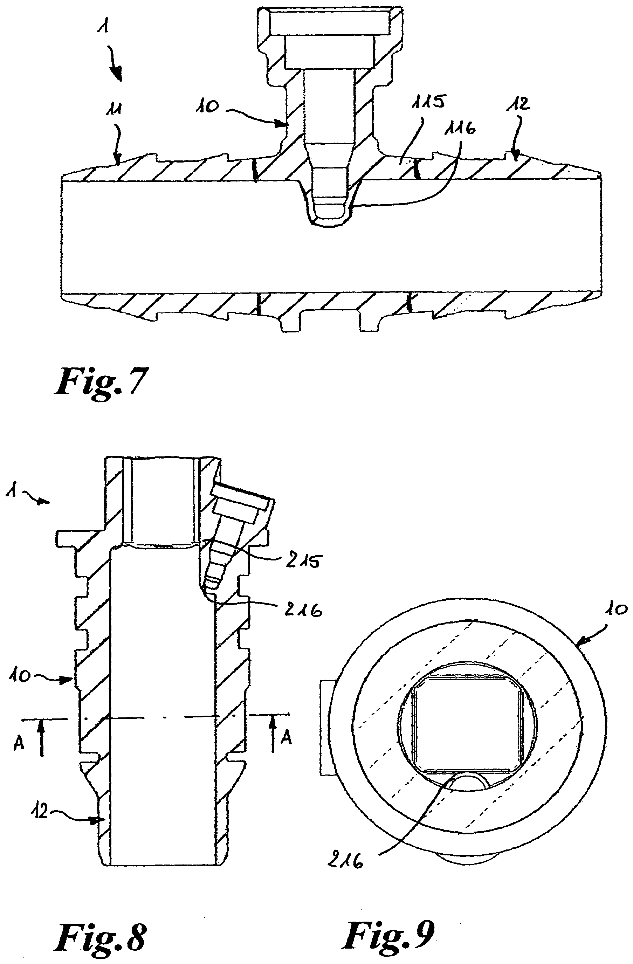

Die Figuren 7 bis 9 zeigen zwei weitere Ausführungsvarianten für das Anordnen des Sensorelementes 23 bzw. der Messeinrichtung 2 im Gehäuse 10 der Verbindungseinrichtung 1. In beiden Fällen ist das Sensorelement 23 nicht selbst umspritzt, sondern in der Wandung 115 nach Figur 7 bzw. 215 nach Figur 8 und 9 eine taschenartige Ausformung oder Ausnehmung 116 bzw. 216 aus wärmeleitfähigem Material ausgeformt. Diese taschenartige Ausformung 116 bzw. 216 ragt in den Mediumkanal 13 des Gehäuses 10 der Verbindungseinrichtung 1 hinein. Die taschenartigen Ausnehmungen bzw. Ausformungen 116, 216 sind jeweils so geformt, dass das Sensorelement 23 in diese formschlüssig aufgenommen wird bzw. werden kann. Durch das Ausformen der taschenartigen Ausnehmung bzw. Ausformungen 116 bzw. 216, die den Strömungsweg des Mediums, das durch den Mediumkanal 13 hindurchströmt, hineinragen, kann über das wärmeleitfähige Material der taschenartigen Ausnehmung 116 bzw. 216 ein optimaler Wärmeübergang zu dem Sensorelement, das formschlüssig in der Ausnehmung 116 bzw. 216 der Wandung 115 bzw. 215 aufgenommen ist, erzielt werden. Das jeweils zum Ausbilden der Wandung 115 bzw. 215 und der darin ausgeformten taschenartigen Ausnehmung bzw. Ausformung 116 bzw. 216 verwendete wärmeleitfähige Material, insbesondere wärmeleitfähige und elektrisch isolierende Material, ist wiederum stoffschlüssig mit dem übrigen Material 17 des Gehäuses 10 der Verbindungseinrichtung 1 verbunden, so dass eine formschlüssige, absolut dichte Aufnahme des Sensorelementes 23 in der jeweiligen taschenartigen Ausnehmung 116 bzw. 216 im Gehäuse 10 der Verbindungseinrichtung 1 ermöglicht werden kann. Da hier keine weiteren Dichtelemente zum Abdichten erforderlich sind, sondern eine stoffschlüssige Verbindung des wärmeleitfähigen Materials mit dem Material 17, das das Gehäuse 10 der Verbindungseinrichtung 1 ansonsten ausbildet, vorgesehen wird, ist völlig unabhängig von der Umgebungs- und Medientemperatur ein Eindringen von Medium in die taschenartigen Ausnehmungen 116 bzw. 216 in den Wandungen 115 bzw. 215 des Gehäuses 10 der Verbindungseinrichtung 1 nicht möglich bzw. sicher unterbunden. Im Unterschied zum Stand der Technik kann hier somit unabhängig von Temperaturänderungen stets eine dichte und gegen den Kontakt mit dem durch den Mediumkanal 13 strömenden Medium geschützte Aufnahme des Sensorelements 23 in dem Gehäuse 10 der Verbindungseinrichtung 1 sichergestellt werden.

Wie bereits vorstehend erläutert, kann der Ummantelungsabschnitt 28 aus wärmeleitfähigem Material 2 in den Fluid- bzw. Mediumkanal 13 hineinragend angeordnet werden. Figur 10 zeigt eine leichte Modifikation der in Figur 1 gezeigten Ausführungsvariante, wobei bei der in Figur 10 gezeigten Ausführungsvariante die außenseitigen Rippen 29 am Ummantelungsabschnitt 28 vollständig mit dem umgebenden Material 17 des Gehäuses 10 der Verbindungseinrichtung 1 verschmolzen sind, so dass diese nicht mehr erkennbar sind. Es hat somit eine stoffschlüssige Verbindung zwischen dem wärmeleitfähigen Material des Ummantelungsabschnitts 28 und dem Material 17 des übrigen Gehäuses 10 stattgefunden.

Bei der in Figur 11 gezeigten Ausführungsvariante ragt nicht mehr der Ummantelungsabschnitt 28 aus wärmeleitfähigem Material der Messeinrichtung 2 in den Mediumkanal 13 im Inneren des Gehäuses 10 der Verbindungseinrichtung 1 hinein, sondern ist in der dort mit einer größeren Wandstärke d_{w} als die Wandung 15 nach Figur 1 und 10 versehenen Wandung 315 aufgenommen. Wie bereits bei den Ausführungsformen nach Figur 1 und 10 ist auch hier wiederum das den Ummantelungsabschnitt 28 und einen Teilbereich der Anschlusselemente 21, 22 stoffschlüssig umgebende Material der Wandung 315 des Gehäuses 10 der Verbindungseinrichtung 1 nicht aus einem wärmeleitfähigen Material ausgebildet, jedoch aus einem Spritzgussmaterial, das sich ohne weiteres stoffschlüssig mit dem wärmeleitfähigen Material des Ummantelungsabschnitts 28 der Messeinrichtung 2 verbindet. Wie Figur 11 weiter entnommen werden kann, ist der Ummantelungsabschnitt 28 vollständig in das Material 17 der Wandung 315 aufgenommen, wobei das frontseitige Ende 20 des Ummantelungsabschnitts 28 der Messeinrichtung 2 von einem dünnen Wandungsabschnitt 316 aus dem Material 17 des Gehäuses 10 der Verbindungseinrichtung 1 überdeckt wird, also aus thermisch isolierendem Material. Der das frontseitige Ende 20 überdeckende Wandungsabschnitt 316 ist so dünn ausgebildet, dass dennoch eine gute Erfassung der Temperatur des durch den Mediumkanal 13 strömenden Mediums durch das Sensorelement 23 möglich ist. Die Materialstärke kann hier beispielsweise weniger als 2 mm, insbesondere 1 bis 0,5 mm, betragen.

Der Übergangsbereich 14 des Gehäuses 10 der Verbindungseinrichtung 1, in dem die Messeinrichtung 2 angeordnet ist, wird außenseitig isolierend von einer Kapselung 3 umgeben. Dies ist ebenfalls Figur 11 zu entnehmen. Anstelle eines lediglich bereichsweisen Vorsehens der Kapselung 3 im Übergangsbereich 14, in dem die Messeinrichtung 2 angeordnet ist, kann auch eine vollständige Kapselung der gesamten Verbindungseinrichtung 1 zu deren thermischer Isolierung vorgesehen werden. Eine solche thermische Isolierung erweist sich als vorteilhaft, um einen Wärmeabtransport nach draußen durch die Gehäusewandungen des Gehäuses 10 hindurch zu verhindern und um in dem Übergangsbereich 14 eine optimale Temperaturerfassung im Hinblick auf die Mediumtemperatur des durch den Mediumkanal 13 hindurchströmenden Mediums zu ermöglichen. Eine solche Kapselung 3 kann bei jeder der in den Figuren 1 und 7 bis 13 gezeigten Ausführungsvarianten der Verbindungseinrichtung 1 vorgesehen werden.

In Figur 12 ist eine weitere Ausführungsvariante der Verbindungseinrichtung 1 gezeigt, wobei bei dieser, wie bereits vorstehend erwähnt, das mit den beiden Anschlusselementen 21, 22 vormontierte Sensorelemente 23, wie es in Figur 2 gezeigt ist, direkt in ein die Wandung 317 ausbildendes wärmeleitfähiges Material eingebettet ist. Auch hier ist das Gehäuse 10 wiederum als ZweiKomponentengehäuse aufgebaut, wobei die eine Komponente das wärmeleitfähige Material der Wandung 317 ist, das in dem Bereich der Messeinrichtung 2, also einem begrenzten Bereich, angeordnet ist, wohingegen der übrige Teil des Gehäuses 10 aus thermisch isolierendem und mechanisch stabilem Material 17 besteht.

Bei der in Figur 13 gezeigten Ausführungsvariante wird im Unterschied zu der in Figur 12 gezeigten Ausführungsvariante nicht das lediglich mit den beiden Anschlusselementen 21, 22 vormontierte Sensorelement 23 in das wärmeleitfähige Material integriert, sondern das mit dem Ummantelungsabschnitt 28 aus wärmeleitfähigem Material versehene Sensorelement 23 bzw. die Messeinrichtung 2, wie sie in Figur 3 bzw. 4 und 5 beispielhaft gezeigt ist. Auch in diesem Falle weist die Wandung 317 wiederum eine größere Wandstärke d_{w} als die übrigen Wandungen des Gehäuses 10 auf, da die Wandung 317 in den Mediumkanal 13 hineinragt, um die Messeinrichtung 2 mit dem Sensorelement 23 besonders weit in den Strömungsweg bzw. in den Mediumkanal 13 hineinragen zu lassen und zugleich vollständig in dem wärmeleitfähigen Material der Wandung 317 aufzunehmen. Hierdurch wird eine besonders gute Temperaturerfassung ermöglicht.

Sowohl bei der in Figur 13 als auch bei der in Figur 12 gezeigten Ausführungsvariante können wiederum im Prinzip gleiche Materialien für die wärmeleitfähige Wandung 317 und die übrigen Bereiche des Gehäuses 10 der Verbindungseinrichtung 1 gewählt werden, wie beispielsweise ein PA12, wobei dieses im Bereich der wärmeleitfähigen Wandung 317 wärmeleitfähig dotiert ist, im übrigen Bereich jedoch nicht, so dass der übrige Bereich des Gehäuses 10 thermisch isolierend ist.

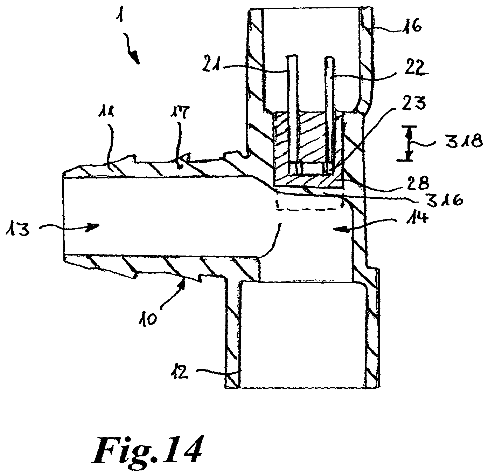

Bei der in Figur 14 gezeigten Ausführungsvariante der Verbindungseinrichtung 1 weist die Messeinrichtung 2 einen das Sensorelement 23 umgebenden zylindrischen Ummantelungsabschnitt 28 auf, der durch Laserschweißen in das Material des Gehäuses 10 eingebettet ist. Entweder ist die Messeinrichtung 2 vollständig in die Wandung des Gehäuses eingebettet, wobei, wie bei der Ausführungsvariante nach Figur 11, auch hier das frontseitige Ende 20 des Ummantelungsbereichs 28 von der dünnen Wandung 316 aus dem Material 17 des Gehäuses 10 überdeckt ist. Alternativ kann der Ummantelungsabschnitt 28 in den Mediumkanal 13 hineinragen, wie durch die gestrichelte Linie in Figur 14 angedeutet. Der Bereich, der lasergeschweißt ist, um eine stoffschlüssige Verbindung des Ummantelungsabschnitts 28 und des Gehäuses 10 vorzusehen, ist in Figur 14 durch das Bezugszeichen 318 gezeigt. Das Gehäuse der Verbindungseinrichtung 1 ist zumindest in dem Bereich des Anschlussabschnitts 16 lasertransparent ausgebildet, um ein stoffschlüssiges Verbinden mit dem Ummantelungsabschnitt 28 durch Laserschweißen zu ermöglichen. Insbesondere kann der Anschlussabschnitt 16 einen Glasfaseranteil von weniger oder gleich 30 % aufweisen. Außer durch Laserschweißen kann eine stoffschlüssige Verbindung auch durch Ultraschallschweißen oder Reibschweißen vorgesehen werden, wobei in diesem Falle der Anschlussabschnitt 16 nicht aus einem lasertransparenten Material zu bestehen braucht.

Im Vorstehenden wird durchgängig ein wärmeleitfähiges Material, das zum Ermöglichen einer optimalen Temperaturerfassung durch das Sensorelement mit diesem bzw. dem Medium in Kontakt steht, genannt.

Neben den im Vorstehenden beschriebenen und in den Figuren gezeigten Ausführungsvarianten von Verbindungseinrichtungen und Messeinrichtungen, die in diesen angeordnet bzw. in diese integriert werden, können noch zahlreiche weitere vorgesehen werden, bei denen jeweils das Sensorelement der Messeinrichtung in einem wärmeleitfähigen Material dicht gegenüber dem durch den Mediumkanal strömenden oder strömbaren Medium aufgenommen ist und das wärmeleitfähige Material stoffschlüssig mit dem diesem benachbarten Material der Verbindungseinrichtung bzw. des Gehäuses der Verbindungseinrichtung verbunden ist, wobei der mit dem wärmeleitfähigen Material versehene Teil der Messeinrichtung bzw. einer den Mediumkanal begrenzenden Wandung des Gehäuses der Verbindungseinrichtung in den Mediumkanal hineinragt und zumindest teilweise von Medium umströmt werden kann oder umströmt wird. Das Sensorelement ist dabei form- und/oder kraft- und/oder stoffschlüssig in das wärmeleitfähige Material aufgenommen.

### Bezugszeichenliste

- 1: Verbindungseinrichtung
- 2: Messeinrichtung
- 3: Kapselung
- 10: Gehäuse
- 11: Anschlussabschnitt mit Dornprofil
- 12: Anschlussabschnitt zum Steckverbinden
- 13: Mediumkanal
- 14: Übergangsbereich
- 15: Wandung
- 16: Anschlussabschnitt
- 17: Material
- 20: frontseitiges Ende
- 21: Anschlusselement
- 22: Anschlusselement
- 23: Sensorelement
- 24: Kontaktbereich
- 25: Kontaktbereich
- 26: Verbindungssteg
- 27: Quersteg
- 28: Ummantelungsabschnitt aus wärmeleitfähigem Material
- 29: Rippe
- 115: Wandung
- 116: taschenartige Ausformung/Ausnehmung aus wärmeleitfähigem Material
- 121: Abschnitt
- 122: Abschnitt
- 123: Abschnitt
- 124: Abschnitt
- 128: Abschnitt
- 215: Wandung
- 216: taschenartige Ausformung/Ausnehmung aus wärmeleitfähigem Material
- 315: Wandung
- 316: Wandungsabschnitt
- 317: Wandung aus wärmeleitfähigem Material
- 318: lasergeschweißter Bereich
- Δ: Offset
- d_{w}: Wandstärke von 15

## Patentansprüche

1. Verbindungseinrichtung (1) zum Verbinden zumindest zweier Medienleitungen oder einer Medienleitung mit einem Aggregat, wobei die Verbindungseinrichtung (1) ein Gehäuse (10) mit zumindest einem inneren von Medium durchströmbaren Mediumkanal (13) und zumindest eine Messeinrichtung (2) mit Sensorelement (23) zur Bestimmung zumindest einer Kenngröße des Mediums, wie der Mediumtemperatur, umfasst, wobei
das Sensorelement (23) der Messeinrichtung (2) form- und/oder kraft- und/oder stoffschlüssig in einem wärmeleitfähigen Kunststoffmaterial dicht gegenüber dem durch den Mediumkanal (13) strömenden oder strömbaren Medium aufgenommen ist und das wärmeleitfähige Kunststoffmaterial stoffschlüssig mit einem diesem benachbarten Kunststoffmaterial (17) des Gehäuses (10) der Verbindungseinrichtung (1) verbunden ist, wobei das Gehäuse (10) der Verbindungseinrichtung (1) aus zumindest zwei Kunststoffmaterialien besteht, wobei zumindest ein Kunststoffmaterial des Gehäuses (10) nicht oder wenig wärmeleitfähig ist und zumindest ein zweites Kunststoffmaterial des Gehäuses (10) wärmeleitfähig ist, wobei das wärmeleitfähige Kunststoffmaterial des Gehäuses (10) im Bereich des Sensorelements (23) angeordnet ist,
wobei der mit dem wärmeleitfähigen Kunststoffmaterial versehene Teil der Messeinrichtung (2) und/oder der mit dem wärmeleitfähigen Kunststoffmaterial versehene Teil einer den Mediumkanal begrenzenden Wandung (115,215,317) des Gehäuses (10) der Verbindungseinrichtung (1) in den Mediumkanal (13) hineinragt und zumindest teilweise von Medium umströmbar oder umströmt ist, wobei das Sensorelement (23) dabei form- und/oder kraft- und/oder stoffschlüssig in das wärmeleitfähige Kunststoffmaterial aufgenommen ist.

2. Verbindungseinrichtung nach Anspruch 1,
**dadurch gekennzeichnet, dass**
beide Kunststoffmaterialien des Gehäuses (10) aus der gleichen oder einer ähnlichen Materialklasse mit gleichem oder ähnlichem Schmelzpunkt ausgewählt sind.

3. Verbindungseinrichtung (1) nach einem der vorstehenden Ansprüche, **dadurch gekennzeichnet, dass**
das wärmeleitfähige Kunststoffmaterial im Falle der Temperaturerfassung elektrisch isolierend ist und/oder dass sowohl das wärmeleitfähige Kunststoffmaterial als auch das nicht wärmeleitfähige Kunststoffmaterial hydrolysestabilisiert ist und/oder dass zumindest in dem Bereich, in dem die Messeinrichtung (2) in der Verbindungseinrichtung (1) angeordnet ist, letztere außenseitig mit einer Isoliereinrichtung (3), insbesondere einer Kapselung, versehen ist.

4. Verbindungseinrichtung (1) nach einem der vorstehenden Ansprüche, **dadurch gekennzeichnet, dass**
die Messeinrichtung (2) in die den Mediumkanal (13) begrenzende Wandung (15,115,215,317) der Verbindungseinrichtung (1) stoffschlüssig integriert ist und/oder dass in der Wandung (115,215) des Gehäuses (10) der Verbindungseinrichtung (1) eine taschenartige Ausformung oder Ausnehmung (116,216) aus wärmeleitfähigem Kunststoffmaterial zum Einfügen der Messeinrichtung (2) vorgesehen ist.

5. Verbindungseinrichtung (1) nach einem der vorstehenden Ansprüche, **dadurch gekennzeichnet, dass**
das Sensorelement (23) von einer formschlüssigen Ummantelung (28), insbesondere einer Umspritzung oder einem Umguss, aus wärmeleitfähigem Kunststoffmaterial umgeben ist.

6. Verbindungseinrichtung (1) nach Anspruch 5 oder nach einem der Ansprüche 1 bis 4,
**dadurch gekennzeichnet, dass**
das Sensorelement (23) mit der formschlüssigen Ummantelung (28) aus wärmeleitfähigem Kunststoffmaterial oder ohne diese in dem Wandungsbereich (317) des Gehäuses (10) der Verbindungseinrichtung (1), der aus wärmeleitfähigem Kunststoffmaterial besteht oder dieses umfasst, angeordnet ist, oder dass das Sensorelement (23) mit der formschlüssigen Ummantelung (28) aus wärmeleitfähigem Kunststoffmaterial mit dem Gehäuse (10) der Verbindungseinrichtung (1), das aus lasertransparentem Kunststoffmaterial mit einem Glasfaseranteil von größer gleich 30 % besteht, in einem Bereich (318) durch Laserschweißen verbunden ist.

7. Verbindungseinrichtung (1) nach Anspruch 5 oder 6,
**dadurch gekennzeichnet, dass**
zumindest ein Abschnitt (128) des mit der formschlüssigen Ummantelung (28) aus bezüglich der zu erfassenden Messgröße wärmeleitfähigem Kunststoffmaterial versehenen Sensorelements (23) der Messeinrichtung (2) in den Mediumkanal (13) hineinragt.

8. Verfahren zum Herstellen einer Verbindungseinrichtung (1) nach einem der vorstehenden Ansprüche zum Verbinden zumindest zweier Medienleitungen oder einer Medienleitung mit einem Aggregat, wobei die Verbindungseinrichtung (1) ein Gehäuse (10) zumindest einen inneren von Medium durchströmbaren Mediumkanal (13) aufweist und mit zumindest einer Messeinrichtung (2) versehen wird oder ist,
**dadurch gekennzeichnet, dass**
das Sensorelement (23) der Messeinrichtung (2) mit einem wärmeleitfähigen Spritzguss- oder Gussmaterial formschlüssig ummantelt und das Gehäuse (10) der Verbindungseinrichtung (1) spritzgegossen wird, wobei das wärmeleitfähige Kunststoffmaterial mit dem das Gehäuse (10) der Verbindungseinrichtung (1) ausbildenden Kunststoffmaterial (17) beim Spritzgießen stoffschlüssig verbunden wird und wobei das wärmeleitfähige Kunststoffmaterial in den Mediumkanal (13) hineinragt oder in eine diesen begrenzende Wandung (317) integriert wird.

9. Verfahren nach Anspruch 8,
**dadurch gekennzeichnet, dass**
der Prozessdruck beim Umspritzen des Sensorelements (23) mit wärmeleitfähigem Kunststoffmaterial geringer als der Prozessdruck beim Spritzgießen des Gehäuses (10) der Verbindungseinrichtung (1) ist, insbesondere das Verhältnis von Spritzdruck beim Spritzgießen des Gehäuses (10) zu dem Druck beim Umspritzen des Sensorelements (23) 2 bis 4 beträgt.

10. Verfahren nach Anspruch 8 oder 9,
**dadurch gekennzeichnet, dass**
das wärmeleitfähige Kunststoffmaterial so ausgewählt wird, dass sich eine stoffschlüssige Verbindung von wärmeleitfähigem Kunststoffmaterial und dem Kunststoffmaterial des Gehäuses (10) der Verbindungseinrichtung (1) ausbildet, insbesondere durch Anschmelzen einer Randschicht des vorumspritzten Sensorelements (23), insbesondere beide Kunststoffmaterialien einer ähnlichen Materialklasse mit ähnlichen Schmelzpunkten angehören, insbesondere das das Gehäuse bildende Kunststoffmaterial und das wärmeleitfähige Kunststoffmaterial dasselbe Basispolymer umfassen, wobei das das Gehäuse (10) bildende Kunststoffmaterial (17) glasfaserverstärkt und thermisch isolierend und das wärmeleitfähige Kunststoffmaterial wärmeleitfähig dotiert ist.

## Claims

1. Connection device (1) for connecting at least two media lines or for connecting a media line to an assembly, wherein the connection device (1) comprises a housing (10) having at least one inner medium channel (13), through which medium is able to flow, and at least one measurement device (2) having a sensor element (23) for determining at least one parameter of the medium, such as the temperature of the medium,
wherein
the sensor element (23) of the measurement device (2) is held by form-fitting and/or force-based engagement and/or by material bonding in a thermally conductive plastics material in such a manner that it is sealed with respect to the medium which is flowing or is able to flow through the medium channel (13), and the thermally conductive plastics material is connected by material bonding to a plastics material (17) adjacent thereto of the housing (10) of the connection device (1), wherein the housing (10) of the connection device (1) consists of at least two plastics materials, wherein at least one plastics material of the housing (10) is not thermally conductive or has little thermal conductivity and at least a second plastics material of the housing (10) is thermally conductive, wherein the thermally conductive plastics material of the housing (10) is arranged in the region of the sensor element (23),
wherein that part of the measurement device (2) that is provided with the thermally conductive plastics material and/or that part of a wall (115, 215, 317), delimiting the medium channel, of the housing (10) of the connection device (1) that is provided with the thermally conductive plastics material projects into the medium channel (13) and medium is able to flow or flows at least partially around it, wherein the sensor element (23) is held in the thermally conductive plastics material by form-fitting and/or force-based engagement and/or by material bonding.

2. Connection device according to claim 1,
**characterised in that**
the two plastics materials of the housing (10) are selected from the same or a similar material class with the same or a similar melting point.

3. Connection device (1) according to any one of the preceding claims,
**characterised in that**
the thermally conductive plastics material in the case of temperature detection is electrically insulating, and/or **in that** both the thermally conductive plastics material and the non-thermally conductive plastics material are stabilised against hydrolysis, and/or **in that** at least in the region in which the measurement device (2) is arranged in the connection device (1), the connection device is provided on the outside with an insulation device (3), in particular an encapsulation.

4. Connection device (1) according to any one of the preceding claims,
**characterised in that**
the measurement device (2) is integrated by material bonding into the wall (15, 115, 215, 317) of the connection device (1) that delimits the medium channel (13), and/or **in that** there is provided in the wall (115, 215) of the housing (10) of the connection device (1) a pocket-like formation or recess (116, 216) of thermally conductive plastics material for insertion of the measurement device (2).

5. Connection device (1) according to any one of the preceding claims,
**characterised in that**
the sensor element (23) is surrounded by a form-fitting sheathing (28), in particular an overmoulding or encapsulation, of thermally conductive plastics material.

6. Connection device (1) according to claim 5 or according to any one of claims 1 to 4,
**characterised in that**
the sensor element (23) with the form-fitting sheathing (28) of thermally conductive plastics material or without said sheathing is arranged **in that** wall region (317) of the housing (10) of the connection device (1)that consists of or comprises thermally conductive plastics material, or **in that** the sensor element (23) with the form-fitting sheathing (28) of thermally conductive plastics material is connected to the housing (10) of the connection device (1), which housing consists of lasertransparent plastics material with a glass fibre content of greater than or equal to 30%, in a region (318) by laser welding.

7. Connection device (1) according to claim 5 or 6,
**characterised in that**
at least a portion (128) of the sensor element (23) of the measurement device (2) provided with the form-fitting sheathing (28) of plastics material that is thermally conductive with respect to the parameter to be detected projects into the medium channel (13).

8. Method for producing a connection device (1) according to any one of the preceding claims for connecting at least two media lines or for connecting a media line to an assembly, wherein the connection device has a housing (10) having at least one inner medium channel (13), through which medium is able to flow, and is or has been provided with at least one measurement device (2),
**characterised in that**
the sensor element (23) of the measurement device (2) is sheathed in a form-fitting manner by a thermally conductive injection moulding or casting material and the housing (10) of the connection device (1) is injection moulded, wherein the thermally conductive plastics material is connected by material bonding to the plastics material (17) forming the housing (10) of the connection device (1) during the injection moulding, and wherein the thermally conductive plastics material projects into the medium channel (13) or is integrated into a wall (317) delimiting the medium channel.

9. Method according to claim 8,
**characterised in that**
the process pressure in the overmoulding of the sensor element (23) with thermally conductive plastics material is lower than the process pressure in the injection moulding of the housing (10) of the connection device (1), in particular the ratio of the injection pressure in the injection moulding of the housing (10) to the pressure in the overmoulding of the sensor element (23) is from 2 to 4.

10. Method according to claim 8 or 9,
**characterised in that**
the thermally conductive plastics material is so selected that a material-bonded connection of the thermally conductive plastics material and the plastics material of the housing (10) of the connection device (1) forms, in particular by melting an edge layer of the previously overmoulded sensor element (23), in particular the two plastics materials belong to a similar material class with similar melting points, in particular the plastics material forming the housing and the thermally conductive plastics material comprise the same base polymer, wherein the plastics material (17) forming the housing (10) is glass-fibre-reinforced and thermally insulating and the thermally conductive plastics material is thermally conductively doped.

## Revendications

1. Dispositif de raccordement (1) pour raccorder au moins deux conduites de fluide ou une conduite de fluide à un groupe, dans lequel le dispositif de raccordement (1) comprend un boîtier (10) avec au moins un canal de fluide (13) interne pouvant être traversé par un fluide et au moins un dispositif de mesure (2) avec un élément de capteur (23) pour définir au moins une grandeur caractéristique du fluide, comme la température de fluide, dans lequel
l'élément de capteur (23) du dispositif de mesure (2) est logé par complémentarité de forme et/ou à force et/ou par liaison dans un matériau en matière plastique thermoconducteur de manière étanche au fluide circulant ou pouvant circuler à travers le canal de fluide (13) et le matériau en matière plastique thermoconducteur est raccordé par liaison de matière à un matériau en matière plastique (17) adjacent à celui-ci du boîtier (10) du dispositif de raccordement (1), dans lequel le boîtier (10) du dispositif de raccordement (1) est constitué d'au moins deux matériaux en matière plastique, dans lequel au moins un matériau en matière plastique du boîtier (10) n'est pas ou est peu thermoconducteur et au moins un deuxième matériau en matière plastique du boîtier (10) est thermoconducteur, dans lequel le matériau en matière plastique thermoconducteur du boîtier (10) est disposé dans la zone de l'élément de capteur (23),
dans lequel la partie, pourvue du matériau en matière plastique thermoconducteur, du dispositif de mesure (2) et/ou la partie, pourvue du matériau en matière plastique thermoconducteur, d'une paroi (115, 215, 317), délimitant le canal de fluide, du boîtier (10) du dispositif de raccordement (1) dépasse à l'intérieur du canal de fluide (13) et peut être entouré ou est entouré au moins une partie d'un flux de fluide, dans lequel l'élément de capteur (23) est logé ce faisant par complémentarité de forme et/ou à force et/ou par liaison de matière dans le matériau en matière plastique thermoconducteur.

2. Dispositif de raccordement selon la revendication 1, **caractérisé en ce que**
les deux matériaux en matière plastique du boîtier (10) sont choisis parmi la même ou une classe de matériaux similaire avec un point de fusion identique ou similaire.

3. Dispositif de raccordement (1) selon l'une quelconque des revendications précédentes,
**caractérisé en ce que**
le matériau en matière plastique thermoconducteur est électriquement isolant dans le cas de la détection de température, et/ou qu'à la fois le matériau en matière plastique thermoconducteur et le matériau en matière plastique non thermoconducteur sont stabilisés par hydrolyse, et/ou que le dispositif de raccordement (1) est pourvu côté extérieur d'un dispositif d'isolation (3), en particulier d'une encapsulation, au moins dans la zone, dans laquelle le dispositif de mesure (2) est disposé dans le dispositif de raccordement (1).

4. Dispositif de raccordement (1) selon l'une quelconque des revendications précédentes,
**caractérisé en ce que**
le dispositif de mesure (2) est intégré par liaison de matière dans la paroi (15, 115, 215, 317), délimitant le canal de fluide (13), du dispositif de raccordement (1), et/ou qu'une déformation de type compartiment ou un évidement (116, 216) en un matériau en matière plastique thermoconducteur pour insérer le dispositif de mesure (2) est prévue ou prévu dans la paroi (115, 215) du boîtier (10) du dispositif de raccordement (1).

5. Dispositif de raccordement (1) selon l'une quelconque des revendications précédentes,
**caractérisé en ce que**
l'élément de capteur (23) est entouré d'une gaine à complémentarité de forme (28), en particulier d'un enrobage ou d'une pièce coulée, en un matériau en matière plastique thermoconducteur.

6. Dispositif de raccordement (1) selon la revendication 5 ou selon l'une quelconque des revendications 1 à 4,
**caractérisé en ce que**
l'élément de capteur (23) est disposé avec la gaine à complémentarité de forme (28) en un matériau en matière plastique thermoconducteur ou sans celle-ci dans la zone de paroi (317) du boîtier (10) du dispositif de raccordement (1), qui est constituée d'un matériau en matière plastique thermoconducteur ou qui comprend celui-ci, ou que l'élément de capteur (23) est raccordé dans une zone (318) par soudage au laser avec la gaine à complémentarité de forme (28) en un matériau en matière plastique thermoconducteur au boîtier (10) du dispositif de raccordement (1), qui est constitué d'un matériau en matière plastique transparent au laser avec une teneur en fibres de verre supérieure ou égale à 30 %.

7. Dispositif de raccordement (1) selon la revendication 5 ou 6,
**caractérisé en ce que**
au moins une section (128) de l'élément de capteur (23), pourvu de la gaine à complémentarité de forme (28) en un matériau en matière plastique thermoconducteur en ce qui concerne la grandeur de mesure à détecter, du dispositif de mesure (2) dépasse à l'intérieur du canal de fluide (13) .

8. Procédé pour fabriquer un dispositif de raccordement (1) selon l'une quelconque des revendications précédentes pour raccorder au moins deux conduites de fluide ou une conduite de fluide à un groupe, dans lequel le dispositif de raccordement (1) présente un boîtier (10) avec au moins un canal de fluide (13) interne pouvant être traversé par du fluide et est pourvu d'au moins un dispositif de mesure (2),
**caractérisé en ce que**
l'élément de capteur (23) du dispositif de mesure (2) est enveloppé par complémentarité de forme d'un matériau de moulage par injection ou d'un matériau de coulage thermoconducteur et le boîtier (10) du dispositif de raccordement (1) est coulé par injection, dans lequel le matériau en matière plastique thermoconducteur est raccordé par liaison de matière lors du moulage par injection au matériau en matière plastique (17) réalisant le boîtier (10) du dispositif de raccordement (1) et dans lequel le matériau en matière plastique thermoconducteur dépasse à l'intérieur du canal de fluide (13) ou est intégré dans une paroi (317) délimitant celui-ci.

9. Procédé selon la revendication 8,
**caractérisé en ce que**
la pression de processus lors de l'enrobage par injection de l'élément de capteur (23) d'un matériau en matière plastique thermoconducteur est inférieure à la pression de processus lors du moulage par injection du boîtier (10) du dispositif de raccordement (1), en particulier le rapport entre la pression d'injection lors du moulage par injection du boîtier (10) et la pression lors de l'enrobage par injection de l'élément de capteur (23) va de 2 à 4.

10. Procédé selon la revendication 8 ou 9,
**caractérisé en ce que**
le matériau en matière plastique thermoconducteur est choisi de telle manière qu'un raccordement par liaison de matière du matériau de matière plastique thermoconducteur et du matériau en matière plastique du boîtier (10) du dispositif de raccordement (1) se forme, en particulier par application par fusion d'une couche de bord de l'élément de capteur (23) enrobé au préalable, en particulier les deux matériaux en matière plastique font partie d'une classe de matériaux similaire avec des points de fusion similaires, en particulier le matériau en matière plastique formant le boîtier et le matériau en matière plastique thermoconducteur comprennent le même polymère de base, dans lequel le matériau en matière plastique (17) formant le boîtier (10) est renforcé par des fibres de verre et est isolant thermiquement et le matériau en matière plastique thermoconducteur est dopé de manière thermoconductrice.
